# EUROPÄISCHE PATENTANMELDUNG

(11) **EP 1 855 043 A1**
(43) Veröffentlichungstag der Anmeldung: **14.11.2007**
(21) Anmeldenummer: 07106742.5
(22) Anmeldetag: 23.04.2007
(51) Int. Cl.: F16L 33/24, F16L 33/22, F16L 47/04

(54) **Schraubfitting für ein Kunststoffrohr**

(30) Priorität: 10.05.2006 DE 102006021672
(71) Anmelder: Uponor Innovation AB, 513 81 Fristad (SE)
(72) Erfinder: Sobota, Gregor, 96191 Viereth (DE); Kern, Thomas, 97289 Thüngen (DE); Keller, Jörg, 96049 Bamberg (DE); Rippstein, Dr. Klaus, 97500 Ebelsbach (DE)
(74) Vertreter: Hilleringmann, Jochen

(57) **Zusammenfassung**

Der Schraubfitting für ein (Kunststoff-)Rohr ist versehen mit einer Stützhülse (14) mit einem Anschlussende (18), über das ein anzuschließendes Rohr (16) auf die Stützhülse (14) aufschiebbar ist und die ein Dichtungselement (22) zur stirnseitigen Abdichtung des anzuschließenden Rohres (16) und einen Außenvorsprung (24) aufweist, und einer Überwurfmutter (30), die die Stützhülse (14) an deren Außenvorsprung (24) umgreift und die einen Innengewindeabschnitt (38) aufweist. Die Überwurfmutter (30) ist axial über den Außenvorsprung (24) der stützhülse (14) in Richtung auf ihr Anschlussende (18) schiebbar oder erstreckt sich über den Außenvorsprung (24) der Stützhülse (14) in Richtung auf deren Anschlussende (18). Der Innengewindeabschnitt (38) ist als ein Schneidgewinde (40) zum Einschneiden in die Außenseite (46) eines auf die Stützhülse (14) geschobenen und stirnseitig an dem Dichtungselement (22) anliegenden Rohres (16) ausgebildet,

## Beschreibung

Die Erfindung betrifft einen Schraubfitting für ein (Kunststoff-)Rohr, das entweder eine aus Kunststoffmaterial bestehende Wandung oder eine Wandung aus einem Kunststoff-Metall-Verbund aufweist, der an seiner Außenseite Kunststoff aufweist.

Schraubfittinge für Kunststoffrohre sind im Stand der Technik bekannt. Beispiele derartiger Schraubfittinge finden sich in DE 199 34 093 A1 und DE 203 13 506 U1. Derartige Schraubfittinge weisen eine Überwurfmutter auf, die über das anzuschließende Rohr und von dem Anschlussende der Stützhülse aus über diese geschoben wird, um mit der Stützhülse oder dem Fittingkörper verschraubt zu werden. Zumeist befindet sich zwischen dem Fittingkörper und der Überwurfmutter ein geschlitzter Klemmring, der von außen gegen das anzuschließende Rohr gedrückt wird und der Aufnahme von auf das Rohr wirkenden Zugkräften dient.

Der Aufbau bekannter Schraubfittings ist recht aufwendig. Insbesondere müssen mehrere Teile aufeinander abgestimmt und montiert werden.

Aufgabe der Erfindung ist es, einen Schraubfitting für ein Kunststoffrohr zu schaffen, der sich durch einen vereinfachten Aufbau auszeichnet.

Zur Lösung dieser Aufgabe wird mit der Erfindung ein Schraubfitting für ein Kunststoffrohr vorgeschlagen, der versehen ist mit
- einer Stützhülse mit einem Anschlussende, über das ein anzuschließendes Rohr auf die Stützhülse aufschiebbar ist und die ein Dichtungselement zur stirnseitigen Abdichtung des anzuschließenden Rohres und einen Außenvorsprung aufweist, und
- einer Überwurfmutter, die die Stützhülse an deren Außenvorsprung umgreift und die einen Innengewindeabschnitt aufweist,
- wobei die Überwurfmutter axial über den Außenvorsprung der Stützhülse in Richtung auf ihr Anschlussende schiebbar ist oder sich über den Außenvorsprung der Stützhülse in Richtung auf deren Anschlussende erstreckt und
- wobei der Innengewindeabschnitt als ein Schneidgewinde zum Einschneiden in die Außenseite eines auf die Stützhülse geschobenen und stirnseitig an dem Dichtungselement anliegenden Rohres ausgebildet ist.

Erfindungsgemäß weist der Schraubfitting eine Stützhülse mit einem Anschlussende auf, über das das anzuschließende Rohr auf die Stützhülse aufschiebbar ist. An dem dem Anschlussende gegenüberliegenden Ende der Stützhülse befindet sich ein Abdichtungselement, das sich in Umfangsrichtung um die Stützhülse herum erstreckt und der stirnseitigen Abdichtung des anzuschließenden Rohres dient. Von dem Anschlussende aus betrachtet hinter dem Dichtungselement befindet sich ein Außenvorsprung der Stützhülse, der entweder in Umfangsrichtung geschlossen oder unterbrochen ausgebildet ist. Dieser Außenvorsprung ist von einer Überwurfmutter umgriffen, die einen Innengewindeabschnitt aufweist. Die Überwurfmutter erstreckt sich über das Dichtungselement und verläuft innerhalb ihres Innengewindeabschnitts im wesentlichen konzentrisch zur Stützhülse. Gegebenenfalls lässt sich die Überwurfmutter axial auf die Stützhülse und über dessen Dichtungselement schieben, bis der Innengewindeabschnitt im wesentlichen konzentrisch zur Stützhülse verläuft. Alternativ kann die Überwurfmutter in dieser Position auch an der Stützhülse gehalten und z.B. gegen axiale Verschiebungen gesichert sein.

Erfindungsgemäß ist nun das Innengewinde der Überwurfmutter als Schneidgewinde ausgebildet. Dieses Schneidgewinde dringt durch Drehen der Überwurfmutter in die Außenseite eines auf die Stützhülse geschobenen anzuschließenden Rohres ein und verkrallt sich dort. Die Fluidabdichtung des Schraubfittings gegenüber dem angeschlossenen Rohr erfolgt stirnseitig des Rohres durch das Dichtungselement, während das in die Außenseite des Kunststoffrohres hineingeschnittene Innengewinde der Überwurfmutter der Aufnahme von auf das Rohr dienenden Zugkräften dient. Die Überwurfmutter selbst ist durch das Hintergreifen des Außenvorsprungs der Stützhülse gegen axiale Bewegungen bei Einwirkung von Zugkräften auf das angeschlossene Rohr gesichert. Über dieses Schneidgewinde drückt die am Außenvorsprung der Stützhülse anliegende Überwurfmutter das Rohr mit seiner Stirnseite gegen dieses Dichtungselement. Druck- oder Stauchkräfte werden von dem angeschlossenen Rohr direkt in das Dichtungselement übertragen und dort aufgefangen.

Der erfindungsgemäße Schraubfitting zeichnet sich durch einen vereinfachten Aufbau und eine erleichterte Montage auf. Es ist lediglich erforderlich, die Stützhülse auf das anzuschließende Rohr aufzuschieben, ohne dass dieses dazu entgratet werden muss. Nach der Verschraubung der Überwurfmutter mit dem anzuschließenden Rohr lässt sich nun die Stützhülse an ein weiteres Rohrleitungselement anschließen, was beispielsweise durch eine Verschraubung erfolgt. Die Schraubverbindung, wie sie mit dem erfindungsgemäßen Schraubfitting ermöglicht wird, ist wieder lösbar.

Als Material für die Stützhülse und die Überwurfmutter eignen sich Metalle oder Metalllegierungen; aber auch Kunststoffmaterialien, gegebenenfalls faserverstärkte Kunststoffmaterialien und hochtemperaturfeste Kunststoffmaterialien lassen sich für die Stützhülse und die Überwurfmutter verwenden. Als Material für das Dichtungselement eignen sich beispielsweise die bekannten Elastomermaterialien.

Der Außenvorsprung am Fittingkörper braucht nicht notwendigerweise als über die Außenfläche des Fittingkörpers überstehender Bereich ausgebildet zu sein. So ist es z.B. auch möglich, dass der Außenvorsprung durch diejenigen der beiden Flanken einer Umfangs- oder dergleichen Nut gebildet ist, die näher an dem freien Ende der Stützhülse, über welches das anzuschließende Rohr aufgeschoben wird, angeordnet ist.

In vorteilhafter Weiterbildung der Erfindung ist vorgesehen, dass die Stützhülse mindestens zwei voneinander beabstandete Führungsvorsprünge aufweist, die der Anlage an der Innenseite des Rohres dienen. Diese Führungsvorsprünge können über den Umfang der Stützhülse gleichmäßig verteilt sein. Sie können in axialer Erstreckung der Stützhülse oder in einem Winkel dazu verlaufen. Die Führungsvorsprünge stellen sicher, dass sich die Stützhülse innerhalb des anzuschließenden Rohres nicht verkantet oder kippt, sondern im wesentlichen ihre konzentrische Ausrichtung zum anzuschließenden Rohr beibehält.

Die Führungsvorsprünge sind zweckmäßigerweise als in Umfangsrichtung verlaufend an der Außenseite der Stützhülse ausgebildet; insbesondere befinden sich die Führungsvorsprünge am Anschlussende und dem diesen gegenüberliegenden und benachbart zum Dichtungselement angeordneten Ende der Stützhülse. Die Führungsvorsprünge sind z.B. als wulstartige Erhebungen ausgebildet, die entweder in Umfangsrichtung verlaufen oder aber lokal über die Außenseite der Stützhülse verteilt angeordnet sind. Durch punktuelle oder linienförmige, axial voneinander beabstandete Anlagen der Führungsvorsprünge an dem anzuschließenden Rohr wird erreicht, dass die Stützhülse ihre konzentrische Lage relativ zum anzuschließenden Rohr im wesentlichen beibehält.

Zwischen (ggf. jeweils) zwei Führungsvorsprüngen kann die Stützhülse ein Dichtmittel z. B. ein sich um die Stützhülse herum erstreckendes Dichtelement zur zusätzlichen Abdichtung der Stützhülse gegenüber der Innenseite des Kunststoffrohres aufweisen.

Wie bereits eingangs erwähnt, lassen sich mit dem erfindungsgemäßen Schraubfitting Kunststoffrohre anschließen. Unter "Kunststoffrohr" im Sinne der Erfindung wird ein Rohr verstanden, das zumindest im Bereich seiner Außenseite eine Kunststoffbeschichtung bzw. Kunststofflage aufweist. In diese Kunststofflage schneidet sich erfindungsgemäß das Innengewinde der Überwurfmutter hinein. Im übrigen kann die Wandung eines derartigen Kunststoffrohres auch andere Materialien als Kunststoff, beispielsweise Metall, aufweisen. Besonders bevorzugt ist der Einsatz des erfindungsgemäßen Schraubfittings bei Kunststoff-Metall-Verbundrohren, die im Regelfall ein Innen- und ein Außenrohr aus Kunststoffmaterial mit einer dazwischen angeordneten Metallschicht (im Regelfall aus Aluminium oder einer Aluminiumlegierung) aufweisen. Gerade bei Kunststoff-Metall-Verbundrohren ist eine Aufweitung des auf die Stützhülse aufgeschobenen Rohrendes weniger erwünscht. Insoweit ist es zweckmäßig, wenn sich die Außenfläche der Stützhülse in axialer Erstreckung der Stützhülse insgesamt im wesentlichen zylindrisch erstreckt und/oder insbesondere benachbart zum Dichtungselement zylindrisch und ohne Aufweitung ausgebildet ist.

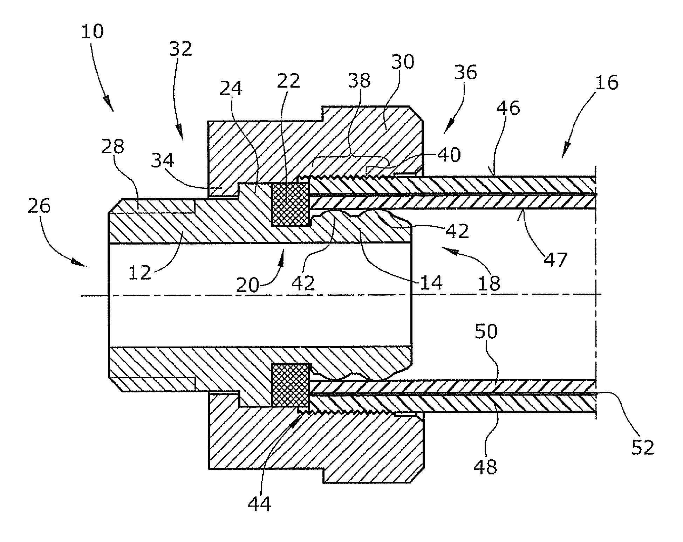

Die Erfindung wird nachfolgend anhand eines Ausführungsbeispiels und unter Bezugnahme auf die Zeichnung, die einen Längsschnitt durch einen Schraubfitting zeigt, näher erläutert.

Der Schraubfitting 10 gemäß dem in der Zeichnung dargestellten Ausführungsbeispiel umfasst einen Fittingkörper 12 mit einer Stützhülse 14, auf die das Ende eines anzuschließenden Rohres 16 aufschiebbar ist. Hierzu weist die Stützhülse 14 ein Anschlussende 18 und ein diesem gegenüberliegendes Ende 20 auf. Im Bereich des dem Anschlussende 18 gegenüberliegenden Endes 20 der Stützhülse 14 ist diese von einem ringförmigen Dichtungselement 22 aus beispielsweise einem Elastomermaterial umgeben. Benachbart zum Dichtungselement 22 weist der Fittingkörper 12 einen Außenvorsprung 24 auf, der in diesem Ausführungsbeispiel an der Außenseite mit der Außenseite des Dichtungselements 22 abschließt.

An seinem der Stützhülse 14 abgewandten Ende 26 ist der Fittingkörper 12 mit einer Anschlussmöglichkeit zum Anschließen des Fittingkörpers 12 an ein anderes Rohrleitungselement versehen. In diesem Ausführungsbeispiel ist der Fittingkörper 12 an seinem Ende 26 mit einem Außengewinde 28 versehen. Über dieses Ende 26 ist eine Überwurfmutter 30 geschoben, die an ihrem einen axialen Ende 32 einen Innenvorsprung 34 aufweist, der den Außenvorsprung 24 des Fittingkörpers 12 umgreift. Im Bereich ihres gegenüberliegenden anderen Ende 36 ist die Überwurfmutter 30 mit einem Innengewindeabschnitt 38 versehen, innerhalb dessen ein als Schneidgewinde ausgebildetes Innengewinde 40 ausgebildet ist. Der Innengewindeabschnitt 38 umgibt bei Anlage des Innenvorsprungs 34 der Überwurfmutter 30 an dem Außenvorsprung 24 des Fittingkörpers 12 dessen Stützhülse 14 konzentrisch. Die Stützhülse 14 ihrerseits ist mit in diesem Ausführungsbeispiel in Umfangsrichtung verlaufenden Führungsvorsprüngen 42 versehen, die axial voneinander beabstandet sind. In diesem Ausführungsbeispiel sind zwei Führungsvorsprünge 42 vorgesehen.

Der Anschluss des Rohres 16 an dem Schraubfitting 10 erfolgt beispielsweise wie folgt,

Zunächst wird der Fittingkörper 12 mit seiner Stützhülse 14 in das Ende des anzuschließenden Rohres 16 hineingesteckt, bis das stirnseitige Ende 44 des Rohres 16 an dem Dichtungselement 22 anliegt. Nunmehr wird über das Ende 26 des Fittingkörpers 12 die Überwurfmutter 30 geschoben. Der Durchmesser der Überwurfmutter 30 in dessen Innengewindeabschnitt ist dabei (geringfügig) größer als der Außendurchmesser des Vorsprungs 24 und des Dichtungselements 22 des Fittingkörpers 12 bzw. der Stützhülse 14. Der Innendurchmesser innerhalb des Innengewindebereichs 38 ist nun derart auf den Außendurchmesser des anzuschließenden Kunststoffrohres 16 abgestimmt, dass sich das Innengewinde 40 beim Aufschrauben der Schraubmutter 30 auf das Rohr 16 in dessen Außenseite 46 hineinschneidet. Dieser Vorgang erfolgt so lange, bis während des Aufschraubens der Überwurfmutter 30 auf das Rohr 16 der Innenvorsprung 34 an dem Außenvorsprung 24 des Fittingkörpers 12 anliegt, Eine weitere Verschraubung der Überwurfmutter 30 führt dazu, dass die Stirnseite 44 des Rohres 16 stärker mit Druck gegen das Dichtungselement 22 gedrückt wird. Während dieses Vorgangs dienen die Führungsvorsprünge 42 der Führung und Positionsbeibehaltung der Stützhülse 14 innerhalb des anzuschließenden Rohres 16, indem die Innenvorsprünge 42 an der Innenseite 47 des Rohres 16 anliegen. Bei dem anzuschließenden Rohr 16 handelt es sich in diesem Ausführungsbeispiel um ein Kunststoff-Metall-Verbundrohr mit einem Außenrohr 48 aus Kunststoff, das die Außenseite 46 des Rohres 16 bildet, einem medienführenden Innenrohr 50 aus Kunststoff und einer zwischen diesen beiden Rohren angeordneten Metallschicht 52 aus Aluminium oder einer Aluminiumlegierung.

## Patentansprüche

1. Schraubfitting für ein Kunststoffrohr oder Kunststoff-Verbundrohr, mit
- einer Stützhülse (14) mit einem Anschlussende (18), über das ein anzuschließendes Rohr (16) auf die Stützhülse (14) aufschiebbar ist und die ein Dichtungselement (22) zur stirnseitigen Abdichtung des anzuschließenden Rohres (16) und einen Außenvorsprung (24) aufweist, und
- einer Überwurfmutter (30), die die Stützhülse (14) an deren Außenvorsprung (24) umgreift und die einen Innengewindeabschnitt (38) aufweist,
- wobei die Überwurfmutter (30) axial über den Außenvorsprung (24) der Stützhülse (14) in Richtung auf ihr Anschlussende (18) schiebbar ist oder sich über den Außenvorsprung (24) der Stützhülse (14) in Richtung auf deren Anschlussende (18) erstreckt und
- wobei der Innengewindeabschnitt (38) als ein Schneidgewinde (40) zum Einschneiden in die Außenseite (46) eines auf die Stützhülse (14) geschobenen und stirnseitig an dem Dichtungselement (22) anliegenden Rohres (16) ausgebildet ist.

2. Schraubfitting nach Anspruch 1, **dadurch gekennzeichnet, dass** die Stützhülse (14) mindestens zwei voneinander beabstandete Führungsvorsprünge (42) zur Anlage an der Innenseite des Rohres (16) aufweist.

3. Schraubfitting nach Anspruch 2, **dadurch gekennzeichnet, dass** die Führungsvorsprünge (42) am Anschlussende (18) und an dem diesem gegenüberliegenden und benachbart zum Dichtungselement (22) angeordneten Ende (20) der Stützhülse (14) ausgebildet sind.

4. Schraubfitting nach Anspruch 2 oder 3, **dadurch gekennzeichnet, dass** ein oder jeder Führungsvorsprung (42) mehrere in Umfangsrichtung aufeinanderfolgende Führungserhebungen aufweist.

5. Schraubfitting nach Anspruch 4, **dadurch gekennzeichnet, dass** die Führungsvorsprünge (42) über den Umfang der Stützhülse (14) oder in Teilbereichen des Umfangs der Stützhülse (14) verteilt angeordnet sind.

6. Schraubfitting nach Anspruch 4 oder 5, **dadurch gekennzeichnet, dass** zwischen zwei Führungsvorsprüngen (42) ein Dichtmittel angeordnet ist.

7. Schraubfitting nach einem der Ansprüche 1 bis 6, **dadurch gekennzeichnet, dass** die Außenfläche der Stützhülse (14) sich in axialer Erstreckung der Stützhülse (14) insgesamt im wesentlichen zylindrisch erstreckt und/oder insbesondere benachbart zum Dichtungselement (22) zylindrisch und ohne Aufweitung ausgebildet ist.
